# EUROPEAN PATENT APPLICATION

(11) **EP 2 730 165 A1**
(43) Date of publication of application: **14.05.2014**
(21) Application number: 12807856.5
(22) Date of filing: 21.06.2012
(51) Int. Cl.: A01M 1/04, G08B 13/00

(54) **INTELLIGENT THEFT-PROOF SOLAR ENERGY INSECT KILLER**

(30) Priority: 06.07.2011 CN 201110187947
(71) Applicant: Liang, Charles, Shenzhen, Guangdong 518125 (CN)
(72) Inventor: Liang, Charles, Shenzhen, Guangdong 518125 (CN)
(74) Representative: Gulde & Partner
(86) International application number: PCT/CN2012/077290
(87) International publication number: WO 2013/004132

(57) **Abstract**

The present invention provides an intelligent antitheft solar disinsector, comprising a base, a stand, lamp holders, light wave resonance light traps, insect collectors, an electric control box and a solar energy gathering plate. The base is mounted with a door magnetic detector. The electric control box and the solar energy gathering plate are fixed on the stand through a tamper-resistant screw. The electric control box is provided therein with a circuit control board and a battery, and a front cover of the intelligent burglar alarm is mounted with an automatic camera and a human body scanner. The solar energy gathering plate, the battery, the door magnetic detector and the intelligent burglar alarm are electrically connected to the circuit control board, respectively, and the circuit control board is provided with a CPU and an RS232 data interface connected to an alarm mainframe. The intelligent antitheft solar disinsector of the present invention has the following advantages and positive effects: since the one way screw, the door magnetic detector, the automatic camera, the human body scanner and the RS232 data interface are added, the product security can be ensured, which enhances the safeguard measures of the disinsector, and serves as the means employed by the alarm mainframe for monitoring and evidence acquisition.

## Description

The present invention claims priority to an application entitled as "intelligent antitheft solar disinsector", numbered as 201110187947.4, and filed by the applicant on July 6, 2011, which is incorporated herein by reference in its entirety.

### Technical Field

The present invention relates to the field of agricultural disinsection technologies, and particularly, to an intelligent antitheft solar disinsector.

### Background Art

In order to realize the sustainable development in agriculture, it is necessary to reduce the pollution of the land and environment caused by the chemical pesticide and fertilizer, and improve the quality and output of the green and pollution-free agricultural products. If pesticides such as aminocarb are used to deal with the insects injurious to the crops, the crops will be polluted, and the ambient environment will be adversely effected very much. However, through special physical technologies and methods, a solar disinsector may be employed to treat the crops, so that the output is increased, the quality is good, the disease is resistant and the ecological environment is protected, while the pesticide usage amount is reduced. But the conventional solar disinsector product is placed outdoors for a long time without being monitored by anybody, and there is no precaution to prevent it from being stolen. How to prevent the product from being stolen or damaged is a new problem to be solved. In order to further improve the performance of the solar disinsector, the market emergently requires a new solar disinsection product having the precautions for theft and damage.

### Summary of the Invention

The object of the present invention is to overcome the above deficiencies of the prior art, and provide an intelligent antitheft solar disinsector which has a simple structure and a theft-damage proofing function.

In order to achieve the above object, an intelligent antitheft solar disinsector provided by the present invention comprising a base, a stand, lamp holders, light wave resonance light traps, insect collectors, an electric control box and a solar energy gathering plate, the insect collector being fixed on the base through the stand, the light wave resonance light trap being located above the insect collector and fixed on the base through the lamp holder and the stand, the electric control box being fixed at the middle of the stand, the solar energy gathering plate being fixed at the top of the stand, the electric control box being provided with a battery and a circuit control board, the solar energy gathering plate and the battery being electrically connected to the circuit control board, respectively; further comprising a tamper-resistant (an anti-tamper screw)screw, a matched wrench, and a GSM alarm system, the electric control box and the solar energy gathering plate being fixed on the stand through the tamper-resistant screw, respectively, the tamper-resistant screw comprising a screw rod and an end-cap, the bottom of the end-cap being a cylinder whose upper edge extends outward to form a circular stage, the upper end surface of the circular stage being provided with a groove having a pentagonal cross-section and the central portion of the groove being provided with a cylindrical protrusion, the matched wrench comprising a handle and a bend integrally connected thereto, the outer edge of the bend forming a pentagonal prism matched with the groove and the central portion of the pentagonal prism is provided with another groove matched with the cylindrical protrusion; the GSM alarm system being provided with a door magnetic detector, an automatic camera, a human body scanner, a GSM alarm mainframe and a short message center alarm receiver, wherein the door magnetic detector is mounted below the base, the automatic camera and the human body scanner are mounted on a front cover of the electric control box, respectively, and the door magnetic detector, the automatic camera and the human body scanner are electrically connected to the circuit control board.

The intelligent antitheft solar disinsector of the present invention, wherein the circuit control board comprises a CPU which is provided with :
a data receiving unit configured to acquire detection data from the door magnetic detector, and image data from the automatic camera and the human body scanner;
a setting and comparing unit configured to set an image area for starting the alarm system, complete a data comparison between the acquired image data and the alarmed image areaand transmit a control instruction to an RS232 data interface according to the detection data from the door magnetic detector;
RS232 data interface configured to transmit a result of the data comparison by the setting and comparing unit and a control instruction to a GSM alarm mainframe, which sends an alarm short message to a short message center alarm receiver for an alarm through a GSM network.

The intelligent antitheft solar disinsector of the present invention, wherein the GSM alarm mainframe further sends an alarm shot message to a subscriber cell phone to start an alarm through the GSM network.

The intelligent antitheft solar disinsector of the present invention, wherein the solar energy gathering plate is a monocrystalline silicon solar cell panel with a rated power of 15V/12W.

The intelligent antitheft solar disinsector of the present invention, wherein the battery is a maintenance free lead-acid battery with a rated voltage of 12V and a capacity of 12Ah.

.The capacity of the battery can also be set as 25Ah.

The intelligent antitheft solar disinsector of the present invention, wherein there are two light wave resonance light traps symmetrically disposed at the two sides of the stand, two lamp holders disposed at the upper left side and the upper right side of the stand, and two insect collectors disposed below the light wave resonance light traps.

In the above intelligent antitheft solar disinsector, the GSM alarm mainframe transponds an alarm message to a subscriber cell phone for an alarm by configuring corresponding wireless communication module.

The intelligent antitheft solar disinsector of the present invention has the following advantages and positive effects: since the one way screw, the door magnetic detector, the automatic camera, the human body scanner and the RS232 data interface to be connected to the alarm mainframe are added, the product security can be ensured, which enhance the safeguard measures of the disinsector, and serve as the means employed by the alarm mainframe for monitoring and evidence acquisition.

Moreover, a better disinsection effect can be obtained when the two light wave resonance light traps work simultaneously.

Next, detailed descriptions will be given in conjunction with the embodiments and with reference to the drawings as follows.

### Brief Description of the Drawings

Fig. 1 is a structure diagram of an intelligent antitheft solar disinsector according to the present invention;
Fig. 2 is a partial enlarged diagram of an electric control box;
Fig. 3 is a structure diagram of a tamper-resistant screw;
Fig. 4 is a structure diagram of a matched wrench of the tamper-resistant screw.

### Detailed Description of the Embodiment

The embodiment of the intelligent antitheft solar disinsector according to the present invention is detailedly described as follows with reference to the drawings.

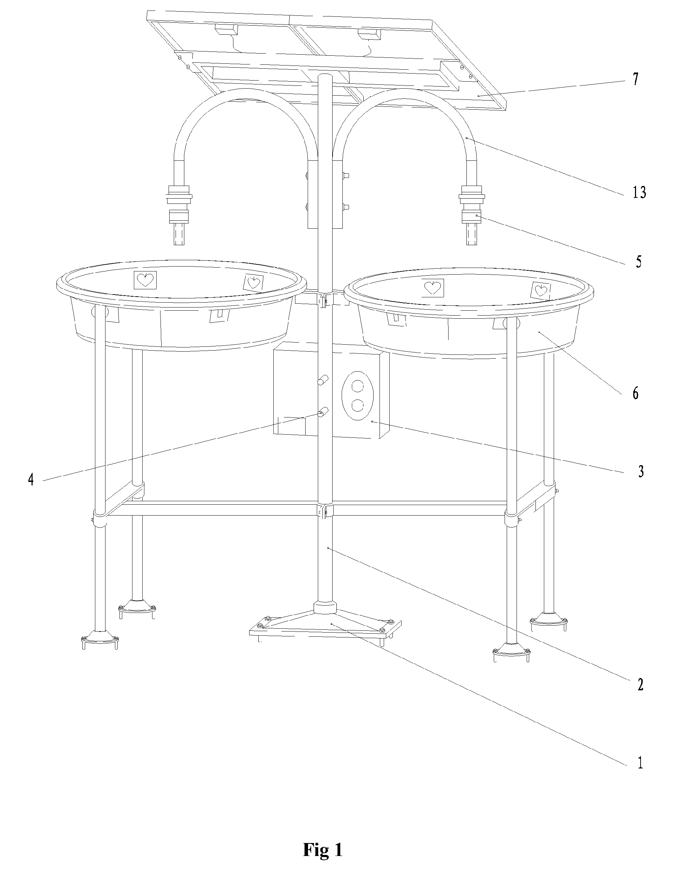

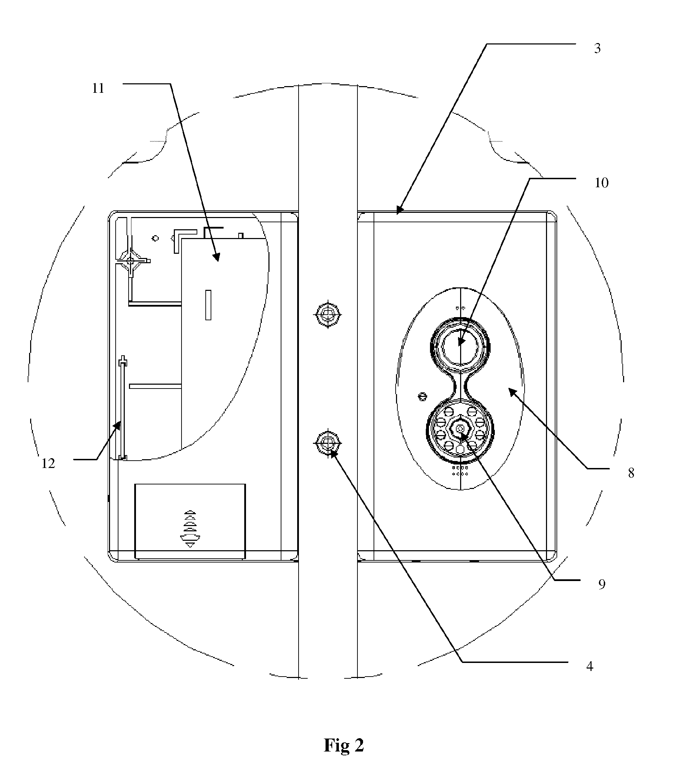

Referring to Figs. 1-2, wherein 1 denotes a base, 2 denotes a stand, 3 denotes an electric control box, 4 denotes a tamper-resistantscrew, 5 denotes a light wave resonance light trap, 6 denotes an insect collector, 7 denotes a solar energy gathering plate, 8 denotes an intelligent burglar alarm, 9 denotes an automatic camera, 10 denotes a human body scanner, 11 denotes a battery, 12 denotes a circuit control board, 13 denotes a lamp holder and 4' denotes a matched wrench.

The intelligent antitheft solar disinsector provided by the embodiment of the present invention includes a base 1, a stand 2, an electric control box 3, a light wave resonance light trap 5, an insect collector 6 and a solar energy gathering plate 7.

The insect collector 6 is a container which contains liquid. The insect collector 6 is fixed on the stand 2, and the light wave resonance light trap 5 is located above the insect collector 6 and fixed on the stand 2 through the lamp holder 13. The electric control box 3 is fixed at the middle of the stand 2 through the one way screw 4, and the solar energy gathering plate 7 is fixed at the top of the stand 2 through the tamper-resistantscrew 4.

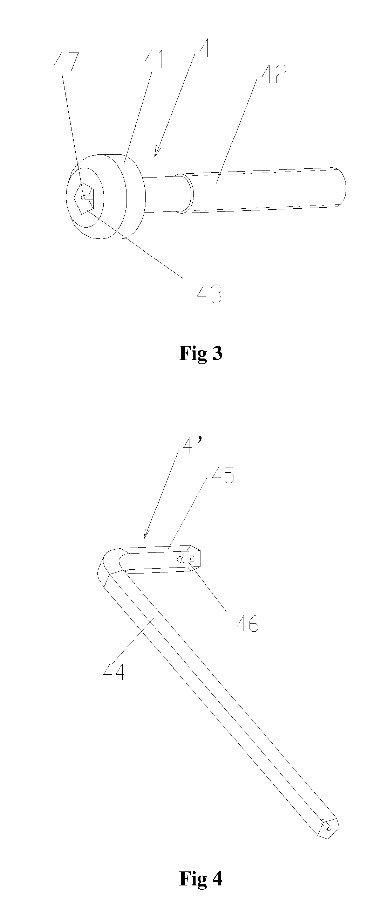

Referring to Figs. 3-4, the tamper-resistant screw 4 includes a screw rod 42 and an end-cap 41. The bottom of the end-cap 41 is a cylinder of which theupper edge extends outward to form a circular stage. The upper end surface of the circular stage is provided with a groove 43 having a pentagonal cross-section, and the central portion of the groove 43 is provided with a cylindrical protrusion 47. The matched wrench 4' includes a handle 44 and a bend 45 integrally connected thereto. The outer edge of the bend 45 forms a pentagonal prism matched with the groove 43, and the central portion of the pentagonal prism is provided with another groove 46 matched with the cylindrical protrusion 47.

The battery 11, the circuit control board 12 and the intelligent burglar alarm 8 are mounted inside the electric control box 3. A door magnetic detector is mounted below the base 1.

The solar energy gathering plate 7 and the battery 11 are electrically connected to the circuit control board 12, respectively. The solar energy gathering plate 7 is a monocrystalline silicon solar cell panel with a rated power of 15V/12W. The battery 11 is a maintenance free lead-acid battery with a rated voltage of 12V and a capacity of 12Ah.

The intelligent burglar alarm 8 includes an automatic camera 9 and a human body scanner 10, which are mounted on a front cover of the intelligent burglar alarm 8, respectively. The automatic camera 9, the human body scanner 10 and the door magnetic detector in the intelligent burglar alarm 8 are electrically connected to the circuit control board 12, respectively. The circuit control board 12 includes a CPU, which is provided with a data receiving unit, an image area setting and comparing unit and aRS232 data interface. The data receiving unit is configured to acquire voltage data of the battery 11, detection data from the door magnetic detector, and image data from the automatic camera 9 and the human body scanner 10. The setting and comparing unit is configured to set a level threshold for a discharge of the battery 11, complete a comparison with the acquired voltage data, and transmit a control instruction to a voltage monitoring protection unit according to the result of the comparison. Meanwhile, the setting and comparing unit is configured to set an image area for starting an alarm, complete a data comparison between the acquired image data and the alarmed image area, and transmit a control instruction to the RS232 data interface according to the detection data of the door magnetic detector. The voltage monitoring protection unit is configured to output a signal to control the automatic turn-off of the light wave resonance light trap 5 to protect the battery 11. The control unit is configured to send a control signal for the turn-on time duration of the light wave resonance light trap 5. The RS232 data interface is configured to transmit a result of the data comparison by the setting and comparing unit and a control instruction to a remote alarm mainframe to start an alarm.

The alarm process is as follows: when a person steals or intends to damage the disinsector, the human body scanner 10 outputs a signal to the circuit control board 12 after sensing the person, and the CPU of the circuit control board 12 instructs the camera 9 to shoot, which is meant for monitoring and evidence acquisition. The door magnetic detector also sends an acquisition signal when the disinsector is damaged, then the CPU judges whether a damaging behavior really happens, and starts the remote alarm mainframe for an alarm through the RS232 data interface.

The GSM alarm mainframe sends an alarm short message to the subscriber cell phone for an alarm through the GSM network.

In the embodiment of the intelligent antitheft solar disinsector provided by the present invention, there are two light wave resonance light traps 5, which are frequency vibration light traps with integrated functions of moth, insect and mosquito luring, a wavelength of 320-680nm, and a rated power of 12V/8W. The light wave resonance light traps 5 are symmetrically disposed at the two sides of the stand 2, two lamp holders 13 are disposed at the upper left side and the upper right side of the stand 2, and two insect collectors 6 are disposed below the light wave resonance light traps 5. Thus a better disinsection effect can be obtained when the two light wave resonance light traps 5 work simultaneously.

When the voltage monitoring protection unit of the CPU detects that the discharge of the battery 11 is lower than the set level threshold, the control unit of the CPU generates an output signal to control the light wave resonance light trap 5 to be automatically turned off. Such threshold voltage protection prevents the phenomenon that the light wave resonance light trap 5 is repeatedly turned on due to the voltage rebounce of the battery 11, thereby prolonging the service life of the light wave resonance light trap 5. Meanwhile, such threshold voltage protection also effectively controls the overdischarge of the battery 11 and prolongs the service life of the battery 11. In the night, after the light wave resonance light traps 5 are turned on, the circuit control board 12 controls the turned-on time duration to be 6 hours, so as to effectively trap and kill various injurious insects, protect the beneficial insects, and achieve the ecological balance in the nature.

The intelligent antitheft solar disinsector of the present invention is power supplied by the solar energy gathering plate, without requiring an external power source, which is convenient and practical. In addition to being charged with the solar energy gathering plate, the intelligent antitheft solar disinsector may also be charged with a power adapter when there is a normal power source. Thus the intelligent antitheft solar disinsector is suitable for any region and any occasion, and has the normal functions such as light control, time control, rain control, quick charge, automatic turn-on/off, automatic protection, etc. The added human body scanner 10 and camera 9 can ensure the product security, thereby enhancing the safeguard measures of the disinsector.

In order to reduce the damage to the local beneficial insects in particular regions, the light wave resonance light trap 5 with a wavelength of 315∼665nm is selected.

Since the embodiment of the present invention is placed in the remote field, the capacity of the battery 11 may be 25Ah.

In allusion to the development of the wireless communication technologies, the GSM alarm mainframe in the GSM alarm system of the present invention can not only send an alarm short message to the subscriber cell phone for an alarm through the GSM network, but also configure corresponding wireless communication module and connect the CDMA network, the WCDMA network or the WLAN network, so as to transpond an alarm short message to the subscriber cell phone for an alarm through the gateway between the wireless communication networks. By configuring different communication modules, the device can be placed in more optional environments, so that the GSM alarm mainframe selects a wireless communication network where the signal is optimal.

The above descriptions according to the preferred embodiments are merely exemplary , and are not intended to limit the scope of the present invention. Variations and modifications can be made by those skilled in the art without departing from the spirits of the present invention, which shall fall within the scope defined by the appended claims. The technical contents of the present invention have all been described in the claims.

### Industrial Applicability

The intelligent antitheft solar disinsector of the present invention is suitable for the industrial production, and applicable to various outdoor environments, thereby improving the antitheft performance and the service life.

The intelligent antitheft solar disinsector of the present invention can effective avoid the propagation of injurious insects caused by theft, thereby providing a substitution for monitoring the propagation conditions of injurious insects in the disinsection range.

The intelligent antitheft solar disinsector of the present invention has a compact structure and a reasonable design, so that the product production cost is low and the manufacturing is feasible. Consequently, the intelligent antitheft solar disinsector of the present invention has a broad market prospect and a strong industrial applicability.

## Claims

1. An intelligent antitheft solar disinsector, comprising a base (1), a stand (2), lamp holders (13), light wave resonance light traps (5), insect collectors (6), an electric control box (3) and a solar energy gathering plate (7), the insect collector (6) being fixed on the base (1) through the stand (2), the light wave resonance light trap (5) being located above the insect collector (6) and fixed on the base (1) through the lamp holder (13) and the stand (2), the electric control box (3) being fixed at the middle of the stand (2), the solar energy gathering plate (7) being fixed at the top of the stand (2), the electric control box (3) being provided with a battery (11) and a circuit control board (12), the circuit control board (12) being electrically connected to the solar energy gathering plate (7) and the battery (11), respectively, **characterized in that**:
further comprising a tamper-resistant screw (4), a matched wrench (4'), and a GSM alarm system, the electric control box (3) and the solar energy gathering plate (7) being fixed on the stand (2) through the tamper-resistant screw (4), respectively, the tamper-resistant screw (4) comprising a screw rod (42) and an end-cap (41), the bottom of the end-cap (41) being a cylinderof which the upper edge extends outward to form a circular stage, the upper end surface of the circular stage being provided with a groove (43) with a pentagonal cross-section and the central portion of the groove (43) being provided with a cylindrical protrusion (47), the matched wrench (4') comprising a handle (44) and a bend (45) integrally connected thereto, the outer edge of the bend (45) forming a pentagonal prism matched with the groove (43) and the central portion of the pentagonal prism is provided with another groove (46) matched with the cylindrical protrusion (47); the GSM alarm system being provided with a door magnetic detector, an automatic camera (9), a human body scanner(10), a GSM alarm mainframe and a short message center alarm receiver, wherein the door magnetic detector is mounted below the base (1), the automatic camera (9) and the human body scanner (10) are mounted on the front cover of the electric control box (3), respectively, and the door magnetic detector, the automatic camera (9) and the human body scanner(10) are electrically connected to the circuit control board (12).

2. The intelligent antitheft solar disinsector according to claim 1, **characterized in that**, the circuit control board (12) comprises a Central Processing Unit (CPU) which is provided with:
a data receiving unit configured to acquire detection data from the door magnetic detector, and image data from the automatic camera (9) and the human body scanner (10);
a setting and comparing unit configured to set an image area for starting an alarm, complete a data comparison between the acquired image data and the alarmed image area, and transmit a control instruction to an RS232 data interface according to the detection data of the door magnetic detector;
the RS232 data interface configured to transmit a result of the data comparison by the setting and comparing unit and a control instruction to a GSM alarm mainframe, which sends an alarm short message to a short message center alarm receiver to start an alarmthrough the GSM network.

3. The intelligent antitheft solar disinsector according to claim 1 or 2, **characterized in that**, the GSM alarm mainframe further sends an alarm shot message to a subscriber cell phone for an alarm through the GSM network.

4. The intelligent antitheft solar disinsector according to claim 3, **characterized in that**, the CPU is further provided with:
a voltage monitoring protection unit configured to output a signal to control the automatic turn-off of the light wave resonance light trap (5) to protect the battery (11);
a control unit configured to control a turn-on time duration of the light wave resonance light trap (5);
the data receiving unit is further configured to acquire voltage data of the battery (11), the setting and comparing unit is further configured to set a level threshold for a discharge of the battery (11), complete a comparison with the acquired voltage data, and transmit a control instruction to the voltage monitoring protection unit according to a result of the comparison.

5. The intelligent antitheft solar disinsector according to claim 4, **characterized in that**, the solar energy gathering plate (7) is a monocrystalline silicon solar cell panel with a rated power of 15V/12W.

6. The intelligent antitheft solar disinsector according to claim 5, **characterized in that**, the battery (11) is a maintenance free lead-acid battery with a rated voltage of 12V and a capacity of 12Ah.

7. The intelligent antitheft solar disinsector according to claim 6, **characterized in that**, the battery (11) has a capacity of 25Ah.

8. The intelligent antitheft solar disinsector according to claim 6, **characterized in that**, there are two light wave resonance light traps (5), which are mounted on the stand (2) through two lamp holders (13) symmetrically disposed at the two sides of the stand (2), and the two insect collectors (6) are mounted below the two light wave resonance light traps (5),respectively.

9. The intelligent antitheft solar disinsector according to claim 7, **characterized in that**, there are two light wave resonance light traps (5), which are mounted on the stand (2) through two lamp holders (13) symmetrically disposed at the two sides of the stand (2), and the two insect collectors (6) are mounted below the two light wave resonance light traps (5),respectively.

10. The intelligent antitheft solar disinsector according to any of claims 1 to 9, **characterized in that**, the GSM alarm mainframe transponds an alarm message to a subscriber cell phone to start an alarmby configuring corresponding wireless communication module.
